# EUROPEAN PATENT APPLICATION

(11) **EP 0 554 513 A1**
(43) Date of publication of application: **11.08.1993**
(21) Application number: 92117386.0
(22) Date of filing: 12.10.1992
(51) Int. Cl.: A21C 1/00, A21C 1/02, B01F 11/00

(54) **A kneading machine for food products**

(30) Priority: 03.02.1992 IT TO920084
(71) Applicant: SANCASSIANO S.p.A., I-12060 Roddi d'Alba (Cuneo) (IT)
(72) Inventor: Drocco, Amabile, I-12051 Alba (Cuneo) (IT)
(74) Representative: Notaro, Giancarlo

(57) **Abstract**

A kneading machine for foodstuffs comprises a container (2) in channel form, a series of spiral-type kneading tools (17) supported rotatably by a head (13) of which the vertical axes (18) are aligned along the channel container (2) and the container is displaceable vertically and longitudinally in both directions, between a raised position and a lowered position. The channel container (2) is subjected to cyclical motion which comprises a withdrawal stage (A-A1), a lowering stage (A1-A2), an advancing stage (A2-A3) and a raising stage (A3-A). Supply means (42) intermittently supply a succession of batches of mixed product to the loading end (22) of the container (2). The head (13) also supports counter members (30), each of which comprises a vertical wall (32) adjacent an associated tool (17), such that a narrow passage (34) is formed between each tool (17) and the associated wall (32).

## Description

The present invention relates to a kneading machine for foodstuffs, in particular for flour-based mixtures, comprising:
a channel-shaped container for the product to be kneaded, which has a loading end for the product to be kneaded and an unloading end for the mixture obtained;
a series of spiral-type kneading tools supported by a head disposed above the channel container, having respective vertical axes aligned along the channel container, these kneading tools being rotatable about their respective axes;
the container being displaceable in both directions longitudinally and also being displaceable vertically between a raised position, in which the lower ends of the spiral tools are adjacent the bottom of the container, and a lowered position in which the bottom of the container is at a distance from the spiral tools;
control means for the channel container which impart thereto cyclical motion starting from a raised, forward position in the direction of flow of the product, including a first stage of rearward motion in the raised position, a second stage of lowering in the rearward position, a third stage of forward motion in the lowered position, and a fourth stage of raising in the forward position;
intermittent supply means of a succession of batches of mixed product to the loading end of the channel container.

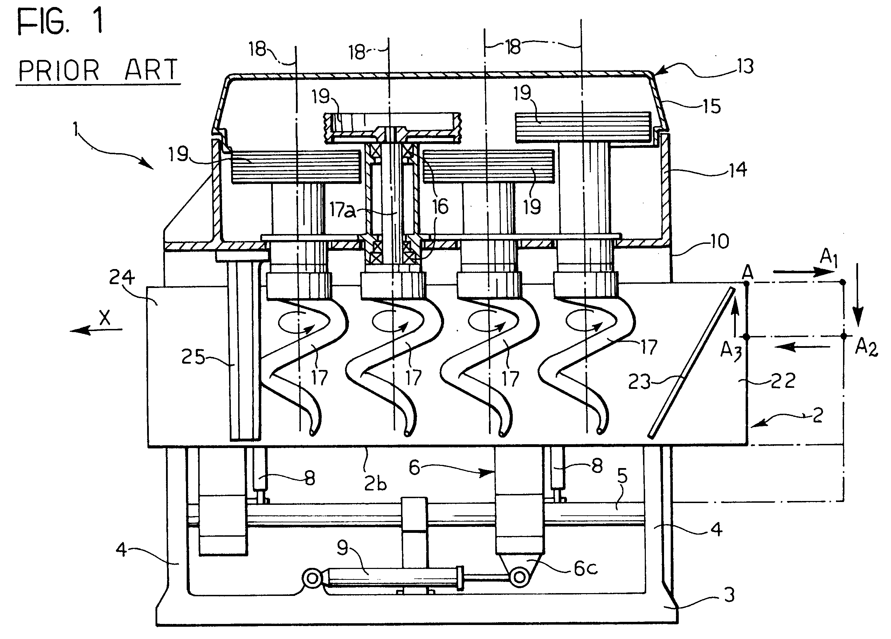

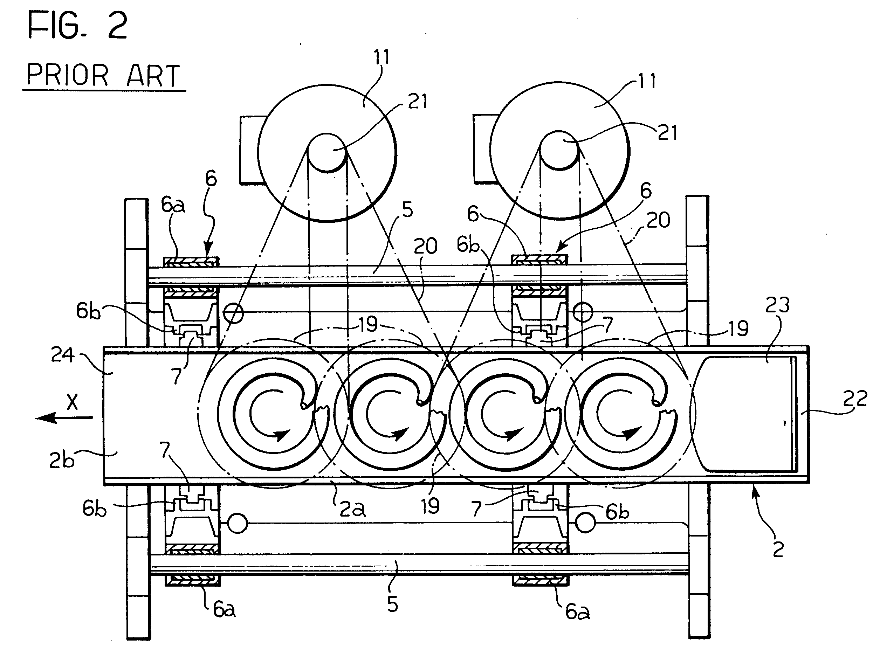

A machine of the above-described type is disclosed in European Application 91112686.0 filed in the name of the same Applicant , and is illustrated in the attached Figures 1 and 2 which show respectively an elevation partially in cross-section and a plan view.

With reference to these Figures, a machine of the aforementioned type is designated 1 as a whole. The machine 1 comprises a channel container 2 made for example of stainless steel, and intended to contain the product while it is being processed by the machine. The machine 2 is mounted on a fixed base structure 3, consisting of four columns 4 to which there are attached the ends of two cylindrical guide bars 5, of which the axes are on a horizontal plane and which are parallel with the longitudinal direction of the channel container 2. A support frame 6 for the channel container 2 is mounted in a sliding manner on the cylindrical guide bars 5. The frame 6 includes four appendages 6a incorporating bushings mounted in a sliding manner in pairs on the cylindrical guide bars 5, by means of interposed plain bearings. The support frame 6 has four vertical guides 6b in which there are mounted guide runners 7 which can be displaced vertically and are supported externally by the structure of the channel container 2.

Two pairs of hydraulic jacks 8 are interposed between the support frame 6 and the appendages (not shown) anchored to the side walls 2a of the channel container 2, in order to move the container 2 vertically relative to the support frame 6 between a raised position and a lowered position. 9 designates a further hydraulic jack interposed between the base structure 3 and a tab 6c provided at the bottom of the support frame 6, for displacing the support frame 6 horizontally relative to the base structure 3, between a forward position (with reference to the direction of feed of the product in the channel container 2, which is indicated by the arrow X), and a rearward position.
The fixed structure 3 of the machine also includes an upright 10, inside which there are disposed two electric control motors 11 and a hydraulic unit (not shown) for controlling the supply of pressurised fluid to the jacks 8, 9. The fixed structure 3 of the machine also includes an upper head 13, comprising a body 14 provided with an upper lid 15, which is attached to the upright 10 and to the columns 4. The bottom wall of the upper head 13 rotatably supports a plurality (four in the embodiment illustrated) of spiral-type kneading tools 17 by means of roller bearings 16. These spiral kneading tools enable excellent results to be obtained from the point of view of quality of the mixture and reduction of kneading time. The kneading tools 17 are supported rotatably about vertical axes 18 aligned in succession in the channel container with the axes 18 intersecting the central longitudinal axis of the container 2. In this machine produced according to the prior art, the cylindrical envelopes of the four kneading tools 17 are substantially tangential in succession with one another.

Each kneading tool 17 has a shaft 17a which is supported by means of the bearings 16 so as to rotate about the head 13. The upper end of each shaft 17a is connected to a pulley 19. The four pulleys 19 are disposed in pairs at different heights in order to avoid interference between them. On the output shaft of each motor 11 there is keyed a double drive pulley 21, which transmits motion by means of two belt units 20 to two pulleys 19 adjacent one another and disposed at different heights such that each of the two motors 11 can rotate simultaneously two kneading tools 17 by means of the above-described belt drive.

The channel container 2 has a loading end 22 for the product to be kneaded, corresponding to which there is a slide 23, and an unloading end 24 for the mixture obtained.

The mixture obtained as output at the unloading end 24 can for example be collected by a conveyor belt (not shown) which transports the mixture towards user machines.

A fixed blade 25 is provided corresponding to the unloading end 24 of the channel container 2, and is disposed tangential to the enveloping cylinder of the last kneading tool 17, such as to facilitate detachment of the kneaded product from this last tool.

The direction of rotation of the kneading tools 17 is anticlockwise, as indicated by the arrows in the drawings (with reference to Figure 2), however each spiral rotates clockwise from the upper end to the lower end. Upstream of the loading end 22 of the channel container 2 there are two mixing units (not shown), each of which is intended to receive cyclically accurately weighed amounts of predetermined ingredients, such as to form a first mix of these ingredients, to be distributed to the loading end 22 of the channel container 2 of the kneading machine, according to a succession of batches.

The above-described machine operates as follows.

When the aforementioned mixing units have received accurately weighed doses of the ingredients required in order to form the product to be kneaded, they are activated such as to produce a first mixture of the ingredients. The two mixing units supply alternately batches of mixed product, which drop onto the slide 23 at the loading end 22 of the channel container 2. When the mixed product starts to be supplied to the loading end 22, the electric motors 11 are activated in order to rotate the four spiral kneading tools 17, by means of the pulleys 21, the belts 20, the pulley 19 and the shafts 17a. As soon as the product supplied to the loading end 22 is intercepted by the first kneading tool 17, the latter begins to perform a kneading action, and at the same time pushes the product towards the next kneading tool.

When the hydraulic jacks 8, 9 are activated, the channel container 2 is displaced such that cyclical motion takes place. More specifically, with reference to Figure 1, this cyclical motion comprises a first stage in which the channel container is in its raised position and moves horizontally from its forward position towards the rearward position (path A - A1), a second stage, in which the channel component moves from its raised position to its lowered position (path A1 - A2), a third stage in which the channel component remains in its lowered position and moves from its rearward position towards the forward position (path A2 - A3), and a fourth stage in which the channel component moves from its lowered position to the raised position, such that it returns to the original position (path A3 - A). The second and third stages, and also the third and fourth stages can be carried out simultaneously (paths A1 - A3 and A2 - A).

However the machine described thus far has the disadvantage that it is difficult to determine accurately the amount of time the mixture remains in contact with the kneading tools, during its movement between the loading end and the unloading end of the channel container, owing to the fact that as soon as a quantity of product comes into contact with a rotating kneading tool 17, the centrifugal force generated by the tool makes some of the product escape from the tool without being subjected correctly to the kneading action. It is thus difficult to control accurately the processing time to which each portion of product is subjected.

The main object of the present invention is to create a kneading machine which can produce continuously a succession of batches of perfectly homogeneous kneaded product, in which it is also possible to intervene in order to vary at will the amount of time the product remains in contact with the kneading tools, and which can produce a mixture of a quality comparable to that of "batch" type spiral kneading machines in common use, in other words which only process one batch of product at a time.

In order to achieve this aim, the object of the present invention is a kneading machine for foodstuffs of the type indicated initially in the present description, in which the head also supports counter members, each of which comprises at least a substantially vertical first wall adjacent to a respective kneading tool in the area downstream of this tool relative to the plane transverse to the channel container in which the axis of the tool is disposed, and relative to the direction of flow of the product, such that between each tool and the associated substantially vertical wall, a narrow passage is formed which increases the amount of time the mixture remains in contact with the kneading tool.

By means of this feature, the machine according to the present invention prevents portions of product which encounter a moving tool from being flung away from the tool, thus preventing these portions from escaping from its the kneading action. It is thus possible to obtain from the unloading end of the machine a succession of perfectly homogeneous mixed batches of a quality comparable to that of mixtures obtained from "batch" type machines. Additionally, by regulating the amount of time the mixture remains in contact with the kneading tools, by controlling the duration of the stages which constitute the cyclical motion of the channel container, the kneading time of the product can be varied at will, thus making the machine extremely versatile and adaptable for processing mixtures for any requirements. In fact each batch of product being processed by a spiral tool is forced by the counter member associated with this tool to remain in the processing area of the tool until the channel container is in its raised position, in which the bottom of the container on which the batch of product is supported, is adjacent the lower end of the spiral tool.

The batch of product is moved on from one spiral tool to the next until it reaches the unloading end of the machine, solely by means of the said cyclical motion of the channel container. Whenever the container lowers, the batch of product remains supported on its base, and thus loses contact with the spiral tool which was processing it. After the subsequent advance motion and raising of the container, the batch of product comes into contact with the next spiral tool, and continues to be processed by this new tool until the container lowers once more.

Further features and advantages of the present invention will become apparent from the following detailed description, with reference to the attached drawings, provided purely by way of non-limiting example, in which:
- Figure 1: is a partial cross-section elevation of a machine according to the prior art;
- Figure 2: is a plan view of the machine in Figure 1;
- Figure 3: is a schematic partial cross-section elevation of a kneading machine according to the invention; and
- Figure 4: is a plan view of the machine in Figure 3.

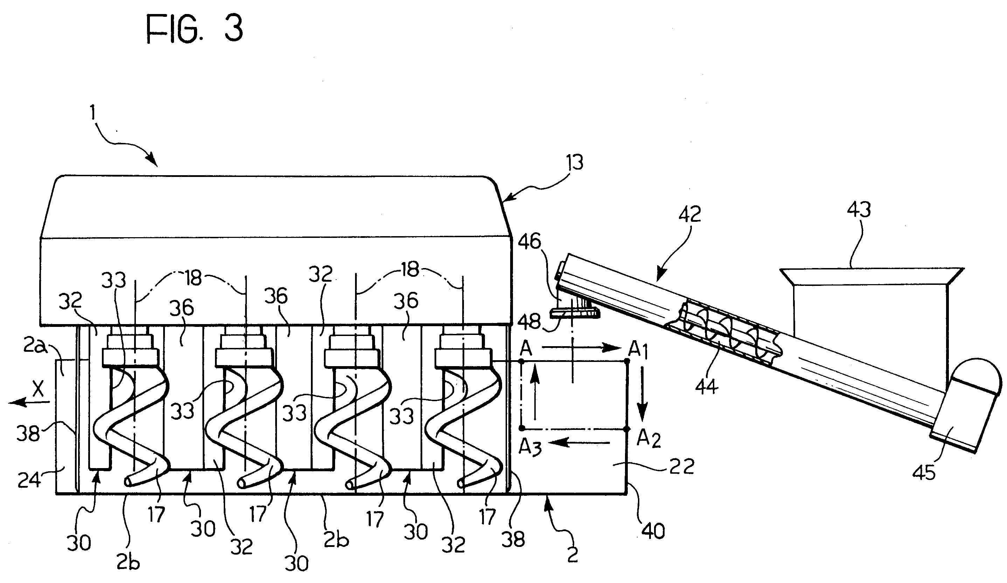

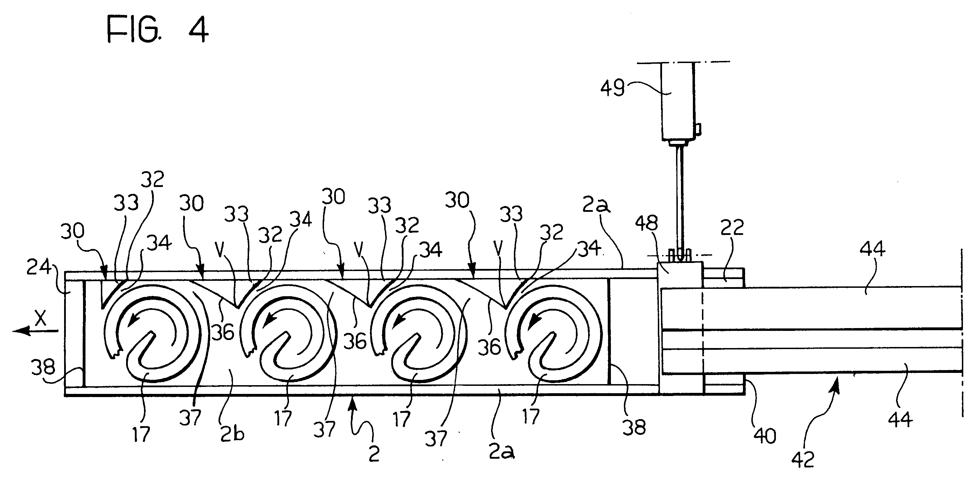

A kneading machine for foodstuffs, in particular for flour-based mixtures, is illustrated schematically in Figures 3 and 4, which show in particular the features of the machine according to the present invention which differ from the machine previously described and produced according to the prior art, and in which the same reference numbers have been used to indicate identical or similar parts.

The machine 1 comprises a channel container 2 which has a base 2b and substantially vertical side walls 2a above which there is an upper head 13 which supports a series of kneading tools 17 hating a helical form commonly known as "spiral". The tools 17 are rotated about respective vertical axes 18 by drive means (not shown since they are of a known type) which are commonly disposed inside the upper head 13. In this case also, the kneading tools rotate in an anti-clockwise direction (as indicated by the arrows in Figure 4), whereas each spiral moves clockwise from its upper end to its lower end. The axes 18 are aligned with one another along the longitudinal direction of the channel container 2 and are at a regular distance from the axes 18 of the adjacent tools 17.

The upper head 13 also supports fixed counter members 30 which project vertically inside the container 2 as far as the vicinity of its bottom 2b, when the container 2 is in its raised position shown in Figure 3.

Each counter member 30 comprises a first elongate wall 32 disposed tangentially to the cylindrical envelope of the kneading tool 17 such as to form a narrow passage 34 between each wall 32 and each tool 17.

Each wall 32 preferably has a first vertical edge disposed in parallel and virtually tangentially to a side wall 2a of the channel container 2, whereas the opposite vertical edge projects in the direction of the central part of the container 2. Each wall 32 is also disposed adjacent the side wall 2a corresponding to which the associated tool 17 moves in accordance with the direction of advance X of the product in the container 2, such that the wall 32 receives the product which tends to escape from its contact with the associated tool, and maintains the product in contact therewith.

According to the embodiment illustrated in Figures 3 and 4, the walls 32 have an arcuate form which is substantially coaxial to the associated kneading tool, with an intake section, in the direction of rotation of each tool 17 indicated by the arrows going in an anti-clockwise direction in Figure 4, which is broader than the output section.

Between each pair of adjacent tools 17, the counter members 30 also comprise a second vertical wall 36, which is wider than the first wall 32, and is disposed substantially contiguous with the kneading tool 17 further forward in the pair, such as to form together with the tool further forward a second narrow passage which is generally broader than the first narrow passage 34, and which conveys the product towards the tool 17 further forward.

The walls 32 and 36 have a common vertical edge forming a V edge which projects in the vicinity of the centre of the container 2, such that each member 30 disposed between two adjacent tools 17 is substantially cusp shaped in plan.

Vertical bulkheads 38 which have a form corresponding to the transverse cross-section of the container 2 in its raised position, are also supported by the upper head 13 and disposed at the ends of the series of kneading tools 17, in order to delimit a kneading chamber which encloses the product in contact with the tools while it is being processed.

At the loading end 22 of the container 2, there is also a closing wall 40 which prevents the mixed product and the product still to be mixed from escaping from the rear part (relative to the direction of flow X of the mixture) of the channel container 2.

A device for supplying the machine 1 is disposed in the vicinity of the loading end of the channel container 2. This device 42 comprises a loading hopper 43 by means of which accurately weighed doses of the ingredients of the mixture are supplied. These ingredients are mixed and supplied to a pair of screw feeders 44 driven by motors 45. Above the loading end 22 of the container 2, there are two mouths 46 for unloading the mixed product, each of which is connected to a screw feeder 44, the mouths 46 being closed by a gate valve 48 which slides in the transverse direction relative to the axis of the screw feeders 44, the sliding of the gate valve 48 being controlled by a hydraulic cylinder 49.

In use, starting for example from a condition in which the channel container 2 has the upper edge of its loading end 22 (with reference to Figure 3) in a raised and forward position indicated by letter A, the channel container 2 undergoes cyclical motion which initially consists of a motion of translation in the longitudinal direction, which cases the container 2 to move rearward of a distance corresponding to the distance between the vertical axes 18 of two successive kneading tools 17 (path A - A1). This rearward motion is controlled by the hydraulic jack 9.

In this rearward position of the container 2, the gate valve 48 is activated by the hydraulic cylinder 49 such as to open the mouths 46, thus permitting a batch of product to be kneaded to drop onto the base 2b of the container 2.

The channel container 2 then moves downwards until it reaches its lowered position (path A1 - A2) as a result of the action of the jacks 8.

When the container 2 moves forwards in its longitudinal direction (path A2 - A3) the batch of product to be kneaded is displaced together with the container 2, until it is under the first of the kneading tools 17, after having passed below the bulkhead 38 present in the rear part of the machine. A subsequent vertical displacement (path A3 - A) makes the first of the kneading tools 17 come into contact with the batch of product to be kneaded.

The presence of the vertical wall 32 ensures that the batch of product to be kneaded remains in contact only with the first of the kneading tools 17, and cannot escape from the rear owing to the presence of the bulkhead 38.

Execution of a further cycle of motion of the channel container 2 enables the batch of product to be kneaded to come into contact with the second kneading tool 17, whereas the first kneading tool 17 receives a new batch of product which is mixed but not yet kneaded.

During each stage of advance of the container 2, the tools 17 "unscrew" from the mixture being processed owing to their direction of rotation and helical form, leaving the mixture deposited on the bottom of the container 2.

After four cycles of the above-described type have been performed, the first batch of kneaded product will start to emerge from the unloading end 24 of the channel container 2.

A conveyor belt (not shown) collects the kneaded product which emerges from the unloading end 24 of the container 2 and transports it for example to a user machine.

It is apparent from the preceding description that the machine according to the invention enables production of perfectly standardised kneaded batches to be obtained continuously from an irregular flow. Additionally, the features of the product are the best which can be obtained by kneading by means of a spiral tool. The weighing of the batches of mixture obtained is strictly standardised, since the batches are obtained from a plurality of small batches supplied continuously in succession from the supply units 42 to the channel container 2, each batch comprising accurately weighed doses of the required ingredients.

By varying the duration of the stage in which the container is in its raised position, the kneading time of the product can be varied at will, thus making the machine suitable for producing mixtures for any type of requirements.

Naturally, the principle of the invention remaining the same, the details of construction and forms of embodiment may vary widely with respect to those described and illustrated purely by way of non-limiting example, without thereby departing from the scope of the present invention.

For example the vertical walls 32 and 36 may have a cross-section which is flat instead of arcuate, or the counter members 30 may comprise only the vertical walls 32. Finally, the means for supplying the accurately weighed succession of batches to the loading end 22 of the channel container 2 may also be different from those illustrated purely by way of example, with reference to Figures 3 and 4.

## Claims

1. A kneading machine for foodstuffs, in particular for flour-based mixtures, comprising:
a channel-shaped container (2) for the product to be kneaded, which has a loading end (22) for the product to be kneaded and an unloading end (24) for the mixture obtained;
a series of spiral-type kneading tools (17) supported by a head (13) disposed above the channel container (2) having respective vertical axes (18) aligned along the channel container (2), these kneading tools (17) being rotatable about their respective axes (18);
the container (2) being displaceable in both directions longitudinally, and also being displaceable vertically between a raised position, in which the lower ends of the spiral tools (17) are adjacent the base (2b) of the container (2), and a lowered position, in which the base (2b) of the container (2) is at a distance from the spiral tools (17);
control means (8, 9) for the channel container (2), which impart thereto cyclical motion from a raised, forward position (A) in the direction of flow (X) of the product, including a first stage of rearward motion the raised position (A-A1), a second stage of lowering in the rearward position (A1-A2), a third stage of forward motion in the lowered position (A2-A3) and a fourth stage of raising in the forward position (A3-A);
intermittent supply means of a succession of batches of mixed product to the loading end (22) of the channel container (2);
characterised in that the head (13) also supports counter members (30), each of which comprises at least a substantially vertical first wall (32) adjacent to a respective kneading tool (17) in the area downstream of this tool (17) relative to the plane transverse to the channel container (2) in which the axis (18) of the tool (17) is disposed, and relative to the direction of flow (X) of the product, such that between each tool (17) and the associated substantially vertical first wall (32) a narrow passage (34) is formed which increases the amount of time the mixture remains in contact with the kneading tool (17).

2. A machine according to Claim 1, characterised in that the distance between the axes (18) of two successive kneading tools (17) is constant and the stages of rearward motion and forward motion of the channel container (2) involve longitudinal displacement thereof of a length corresponding substantially to the distance between the axes (18) of two successive kneading tools.

3. A machine according to either of Claims 1 or 2, characterised in that this substantially vertical first wall (32) is disposed with one of its vertical edges (33) adjacent a lateral wall (2a) of the channel container (2) corresponding to which the tool (17) moves in accordance with the direction of flow (X) of the product.

4. A machine according to either of Claims 2 or 3, characterised in that this first wall (32) has a flat transverse cross-section.

5. A machine according to either of Claims 2 or 3, characterised in that this first wall (32) has an arcuate transverse cross-section and is substantially coaxial to the associated kneading tool (17).

6. A machine according to either of Claims 4 or 5, characterised in that the kneading tools (17) have respective cylindrical envelopes spaced between each other and substantially tangential to the side walls (2a) of the channel container (2).

7. A machine according to any one of Claims 3 To 6, characterised in that each counter member (30) disposed between a pair of adjacent kneading tools (17) also comprises a second substantially vertical wall (36) adjacent the other kneading tool (17) of the pair, this second wall (36) having an edge in common with the first wall (32) such that each counter member (30) disposed between a pair of adjacent kneading tools (17) is substantially cusp-shaped with its apex (V) facing the central area of the channel container (2).

8. A machine according to Claim 7, characterised in that the second wall (36) is wider than the first wall (32).

9. A machine according to any one of Claims 1 to 8, characterised in that this head (13) also supports two bulkheads (38) disposed transversely to the channel container, the form of which corresponds to that of the container, at the two ends opposite the series of kneading tools (17).

10. A machine according to Claim 9, characterised in that the loading end (22) of the channel container (2) is at least partially closed (40).

11. A machine according to any one of Claims 1 to 10, characterised in that the envelopes of the kneading tools (17) are substantially tangential to the side walls (2a) of the channel container (2).
